Europäisches Patentamt

European Patent Office

Office européen des brevets

(19)

(11) Publication number: **0 261 860 B1**

(12) **EUROPEAN PATENT SPECIFICATION**

(45) Date of publication of patent specification: **16.12.92**  (51) Int. Cl.5: **G01F 23/28**

(21) Application number: **87308150.9**

(22) Date of filing: **15.09.87**

(54) Sensor and method for ullage level and flow detection.

(30) Priority: **24.09.86 US 911157**

(43) Date of publication of application:
**30.03.88 Bulletin 88/13**

(45) Publication of the grant of the patent:
**16.12.92 Bulletin 92/51**

(84) Designated Contracting States:
**DE FR GB**

(56) References cited:
**EP-A- 0 167 505**
**WO-A-84/03942**
**GB-A- 1 234 791**
**US-A- 4 107 993**
**US-A- 4 226 118**

**"Fields and waves in communication electronics" by RAMO et al.,John Wiley & Sons, New-York 1965, 1984 pages 553-554**

(73) Proprietor: **CANNONBEAR INC.**
**R4B448**
**College Station Texas 77840(US)**

(72) Inventor: **JEAN, Buford R.**
**Route 4, Box 448**
**College Station, Texas 77840(US)**
Inventor: **Newton, Richard W.**
**2817 East Court**
**Grapevine, Texas 76051(US)**
Inventor: **Warren, Gary L.**
**1409 East 28th Street**
**Bryan, Texas 77802(US)**
Inventor: **Clark, Billy V.**
**2626 B Encina Drive**
**Irving, Texas 75038(US)**

(74) Representative: **Senior, Alan Murray et al**
**J.A. KEMP & CO 14 South Square Gray's Inn**
**London WC1R 5EU(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to techniques for detecting when the contents of a tank or other vessel reach a certain level and, more particularly, to improved techniques for determining when that level is obtained utilizing microwave technology having significant advantages compared to conventional level detection techniques. Further, the present invention relates to detecting flow or no-flow through a conduit using the improved techniques.

Various mechanical devices have long been used to determine when the level of material in a tank or other vessel reaches a certain point. Floats and displacers rely upon the buoyant forces of a liquid, while other devices use diaphrams or vibrating elements to sense the presence of a liquid or solid. Such mechanical devices generally having a high maintenance cost due to deterioration or binding of various mechanically moving parts.

Sensing devices which rely upon measuring the weight of the tank contents require precise knowledge of the specific gravity of the material in order to accurately determine the level of material in the vessel. Optical sensors generally require an extremely clean environment for reliable operation, while sonic devices do not function well in foam or dust environments. Finally, conductivity sensing devices cannot be reliably used for determining the level of many solids or liquids in a tank, such as dielectric materials, and capacitive devices generally are restricted to detecting the level of nonconductive materials.

Microwave sensors have a significant advantage over the devices described above in that such devices may be universally employed for detecting the level of almost any solid or liquid, regardless of its conductivity or specific gravity. Moreover, microwave sensors are generally insensitive to dust, vapors, foam layers, or viscous liquid coatings or thin layers of powder on the sides of the vessel.

U.S. Patent 4,107,993 discloses microwave techniques for detecting the level of a liquid in a vessel. An external chamber constructed of material invisible to microwaves is required, and the system detects amounts of unabsorbed energy to the receiver. Microwave devices of this type experience alignment problems since the transmitter and receiver must be properly positioned with respect to one another.

U.S. Patents 4,218,678, 4,359,902, and 4,044,355 also disclose microwave sensing devices for determining the level of materials in a tank. Microwave devices which utilize radar technology generally seek to determine the travel time of a signal to the detected material and thence to the receiver. The expense and complexity of these devices limits their practical use to situations in which the actual level of the material in the tank must be determined, as compared to devices which simply determine whether the material has or has not reached a certain level.

U.S. Patents 3,572,119 and 4,458,530 are similarly directed to devices intended to quantitatively determine the level of liquid in a vessel. A sensor monitors the alteration of the standing wave passing through the liquid to determine the liquid level.

The disadvantages of the prior art are overcome by the present invention, and improved methods and apparatus are hereinafter described for inexpensively yet reliably determining whether a solid or liquid material in a container has obtained a certain level or if such material is flowing or not.

According to one aspect of the present invention, there is provided a sensor apparatus arranged to detect the presence or absence or for detecting the movement of material in a container or conduit said apparatus comprising

a microwave oscillator (10) arranged to generate a constant propagated microwave in a frequency range of 1 to 20 gigahertz;

a container or conduit adapted to hold therein quantities of material or to guide a varying throughflow of material, respectively, said container or conduit having a measurement portion substantially transparent to the propagated microwave frequency;

a microwave bridge having a first part thereof connected to said microwave oscillator (10) and arranged to divide the microwave into a measurement microwave and a reference microwave;

a first guide attached to said measurement portion of said container or conduit, and arranged to guide the measurement microwave into the container or conduit or through said measurement portion and to return to the microwave bridge, a reflected measurement microwave indicative of the reflection coefficient at the boundary layer of the measurement portion or where the microwave encounters the material, the coefficient being significantly altered by the presence, the absence or the movement of the material at the level of the first guide means;

a second guide arranged to transmit the reference wave from the microwave bridge and to return a reflected reference wave to the microwave bridge;

the microwave bridge being arranged to receive the reflected measurement and reference waves and to produce a difference wave corresponding to the difference in magnitude and phase between the reflected measurement and reference waves;

a detector connected to said microwave bridge and arranged to generate an output indicative of at least one of the magnitude and phase of the difference wave; and

a comparator connected to said detector and arranged to compare the magnitude of the detector output to a preselected signal magnitude and to provide an actuation signal indicative of the presence, absence or movement of the material at the level of the first guide.

Preferably, in use, a propagating wave from a microwave oscillator is divided and transmitted horizontally through a measurement arm in parallel with a referance arm. The impedance presented to the propagating electromagnetic wave in the measurement arm is a function of the conductivity, permittivity, and permeability of the material within the vessel opposite a dielectric window at the end of the measurement arm. A change in the presence of or type of the material will thus produce a change in the amplitude and phase of the reflected wave due to the impedance change seen by the microwave signal at the boundary layer. The divided propagating wave in the reference arm may be altered by resistive and reactive tuning elements, or by boundary layer impedance when that wave engages a select material in a sample chamber.

Preferably, in use, the reflected measurement and reference waves return to the microwave bridge circuit and a differential signal indicative of their difference in magnitude and/or phase is detected by the microwave detector. The signal output from the bridge circuit may thus be proportional to the difference between the reflection coefficient seen by the divided waves in the measurement arm and the reference arm. The reference arm may be tuned to present to the bridge circuit an impedance equal to the impedance normally seen by the measurement arm, thereby increasing the sensitivity of the sensor. This output is fed to suitable electronics for amplifying and comparing that output to a trip point, thereby causing the energization of a suitable relay or other appropriate device for the actuating of an alarm, pump, or other component.

A significant advantage of the present invention relates to its high reliability and reduced maintenance costs, since the system need not utilize moving parts which may wear or bind. If the tank is made from a metallic material, only a single dielectric window transparent to microwaves need be provided, and thus there are no alignment problems between sensors and receivers. If the tank is manufactured from a dielectric material, e.g., fiberglass, no openings in the tank are necessary, thereby substantially reducing installation costs.

The techniques of the present invention achieve a highly reliable yet inexpensive determination of whether the level of a liquid or solid in a tank has reached a given point. The same sensor will work for virtually any material having an impedance different than the electric and magnetic properties of air. Also, techniques of the present invention can be easily utilized to detect the level of an interface between two materials which have different electrical or magnetic properties, and therefore present different impedence values to the propagating wave. As an example, the device of the present invention can easily detect whether the interface between oil and water has reached the level of the detector. The methods and apparatus herein described offer increased reliability, sensitivity, and universal application compared to prior art level sensing switches, and at a cost substantially less than prior art microwave ullage sensors which provide an output indicative of the quantitative level of material in a tank.

According to a further aspect of the present invention there is provided a method for detecting the presence or absence or for detecting the movement of material in a conduit or container, including

generating a constant propagated microwave in a frequency range of from 1 to 20 gigahertz;

separating the propagating microwave into a measurement microwave and a reference microwave;

guiding the measurement microwave into the container or conduit or through a measurement portion of the container or conduit substantially transparent to the propagated microwave frequency and returning a reflected measurement microwave indicative of the reflection coefficient at the boundary layer of the measurement portion, or where the microwave encounters the material, the coefficient being significantly altered by the presence, the absence or the movement of the material at the boundary layer;

transmitting the reference wave and returning a reflected reference wave;

receiving the reflected measurement and reference waves and outputting a difference wave corresponding to the difference in magnitude and phase between the reflected measurement and reference waves;

generating an output indicative of at least one of the magnitude and phase of the difference wave; and

comparing the magnitude of the output to a preselected magnitude and providing an actuation signal indicative of the presence, absence or movement of the material at the boundary layer.

Hence, an alternative embodiment of the present invention provides a method and apparatus for detecting whether solid material is flowing or not flowing through a conduit. The operation of the flow/no-flow concept of the present invention utilizes the changes in output from a microwave bridge circuit that are induced by changes in the reflection coefficient associated with the impact of the waves on the specific material under investigation. Preferably, the method for determining the flow or no-flow of materials in a conduit or container comprises generating a wave, separating the wave into a measurement wave and a standard wave, injecting the measurement wave into the conduit for impacting the available material and returning the reflected measured wave indicative of the reflection coefficient at the point of impact, altering the standard wave for producing a reflected standard wave having an amplitude and phase corresponding to an amplitude and phase associated with the measurement wave, combining the reflected measurement wave with the reflected standard wave for either constructively enhancing or distructively reducing the combined waveform for generating a combined wave, generating a bipolar signal from the combined wave, generating a unipolar signal from the bipolar signal, and generating a drive signal based upon the frequency of the unipolar signal for discriminating between conditions of flow and no-flow as characteristic of the material being evaluated.

The sensitivity of the present invention for determining the flow or no-flow of material in a conduit is readily adjustable. The present invention can be adjusted for discriminating against random pellets dropping past the detector as well as the movement of material past the detector and completely engulfing the conduit.

These and other features and advantages of the present invention will become apparent from the detailed description, wherein reference is made to the figures in the accompanying drawings.

Figure 1 is a simplified function block diagram of the microwave level detector according to the present invention.

Figure 2 is a simplified pictorial illustration of the detector according to the present invention mounted on a tank, along with representative outputs of signal magnitudes depending on whether the level of material in the tank has reached the level of the sensor.

Figure 3 is a pictorial illustration of one embodiment of the present invention mounted in association with a suitable tank, and also depicting in block form the decision electronics generally referenced in Figure 1.

Figures 4A and 4B illustrate a typical signal from the amplifier of the present invention concerning the detector being near null and away from null, respectfully.

Figures 5A and 5B illustrate the resultant signal generally referenced in Figures 4A and 4B, respectively, after modification.

Figures 6A and 6B illustrate the intergration of the signals generally referenced in Figures 5A and 5B, respectively.

Figure 7 is a multisequence illustration of signals generated when the present invention is used for ullage measurements.

Figure 8 is a pictorial illustration of another embodiment of the present invention mounted on a suitable conduit.

Figure 9 illustrates a block diagram of decision electronics generally referenced in Figure 8.

Figures 10A and 10B illustrate a typical signal from the input amplifier associated with the present invention.

Figure 11 illustrates a typical bipolar signal associated with the present invention.

Figure 12 illustrates a typical unipolar signal associated with the present invention.

Figure 13 illustrates a typical relay drive output signal associated with the present invention.

Figure 14 is a multisequence illustration of signals generated in association with the present invention when used for determining flow/no-flow characteristics within a conduit.

The above general description and the following detailed description are merely illustrative of the generic invention, and additional modes, advantages and particulars of this invention will be readily suggested to those skilled in the art by the following detailed description.

## DETAILED DESCRIPTION OF PREFERRED EMBODIMENTS

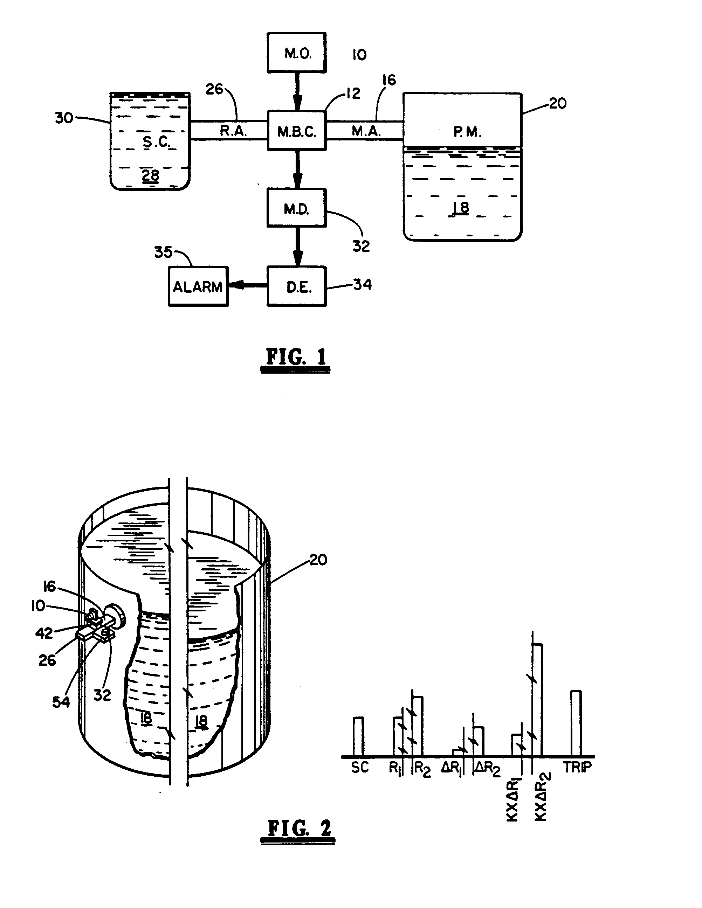

The concept of the present invention is broadly illustrated in block diagram form in Figure 1, and includes a microwave oscillator 10 for generating a constant frequency propagating wave, a microwave bridge circuit 12, a microwave detector 32, decision electronics 34, and a device contolled by the decision electroncs, such as alarm 35. The microwave bridge circuit 12 serves to (a) functionally divide the propagating wave into two parallel waves, (b) receive two reflected waves, and (c) output a reflected differential wave to the detector 32.

One of the divided propagating waves travels down the measurement arm 16 to the tank, vessel, or container 20 containing a propagation medium. Depending on the level of the fluid or solid 18 in the tank 20, the propagating medium seen by the wave in the measurement arm 16 may, in its simplest form, be either air (perhaps with some tank vapors, dust or foam) or fluid 18. The measurement arm reflected wave to the microwave bridge circuit 12 will be altered in amplitude or phase by the impedance of the boundary layer (point of discontinuity) at the end of the measurement arm, and that impedance will depend on the presence or absence of material 18 in the tank 20 at the level of the measurement arm 16.

The other divided propagating wave travels down the reference arm 26 and, in the embodiment shown in Figure 1, is altered by the impedance of the boundary layer at the end of the reference arm 26 presented by the sample chamber material 28 housed in the container 30. The container 30 is filled with a selected material, preferably identical to the material 18 in the tank 20. The reflected reference arm signal will thus be sufficiently different than the reflected measurement arm signal unless the level of the material 18 in the tank 20 covers/encompasses the cross-sectional area of the measurement arm 16 through the which the radiation passes. Accordingly, decision electronics may be provided to either actuate the alarm 35 if there is a sufficient reflected difference signal to the detector 32 (when the level of fluid in the tank 20 falls below the level of the reference arm), or alternatively, when there is not a sufficient reflected difference signal (when the fluid level rises to or above the level of the reference arm). In either case, the technique of the present invention easily, reliably, and inexpensively enables the detection of whether the material level in tank 20 is at or below a certain level, i.e., the level of the reference arm. Moreover, this detection is made without the need for any sensing element to physically contact the material in the tank, and can be made almost irrespective or the type of solid or liquid material in the tank.

The device described above operates on the principle that the impedance presented to a propagating microwave depends upon the electric and magnetic properties of the boundary layer material through which the wave passes. When the wave reaches the boundary layer, at least some of the wave will be reflected, and the amplitude and phase of the reflected wave will thus be functionally related to the boundary layer material, i.e., the material in the tank. Since some factors affect the impedance seen by a wave due to any change in the material at the boundary layer, including the material conductivity, its permittivity, and its permeability, the device of the present invention is ideally suited to be a universal level detector without significant regard to the type of material being detected. A change in the amplitude and phase of the reflected wave will thus occur in almost every instance with a change in the material at the boundary layer. In its simplest form, that change is from air (or vapors, dust, or foam) to a liquid or solid material. It should be understood, however, that the present invention is also well suited to determine a change from one liquid of solid material to another liquid or solid material. The device of the present invention may thus be used to detect a rising or falling interface of liquids, such as an oil/water interface.

Figure 2 depicts a simplified pictorial illustration of the present invention along with representative outputs of signal magnitudes depending on whether the level of material has reached the level of the detector. Microwave oscillator 10 generates and transmits an incident propagating microwave down the waveguide section 42, which wave is divided as explained above by the microwave bridge circuit into two waves travelling down respective waveguide sections or arms 16 and 26. The reflected differential signal travels down the waveguide 54, and is detected by the detector 32.

The material in the sample chamber 30 (Fig. 1) may correspond to the material 18 in the tank. The sample quantity preferably is sufficiently large so as to appear to be an infinite quantity to the reference wave, and thus the value of the reflected signal to the bridge circuit from the sample chamber, SC, will be substantially constant. The magnitude of the reflected signal to the microwave bridge circuit from the measurement arm 16 will, however, depend on the level of fluid in the tank 18. $R_1$ indicates the magnitude of the reflected reference arm signal when the material level is above the level of the measurement arm 16, and $R_2$ indicates the magnitude of the reflected measurement arm signal when the material level is below the level of the reference arm 16.

Accordingly, the difference between the reflected reference arm and the measurement arm signals, which difference is the magnitude of the signal transmitted to the detector 32, is represented in Figure 2 by the designations $\Delta R_1$ and $\Delta R_2$. The difference may be amplified by standard techniques within the decision electronics to produce the sizable difference in the signals $KX \Delta R_1$ and $KX \Delta R_2$. Comparison may thus easily be made between the respective $KX \Delta R_1$ signal and the selected trip value, and the output used to either actuate or not actuate the control device,such as alarm 35.

According to the embodiment as shown in Figures 1 and 2, the device of the present invention may thus be "tuned" or calibrated by placing in the sample chamber the same material whose presence or absence is being detected by the reflected reference arm signal. The embodiment as shown in Figures 1 and 2 is thus virtually insensitive to the affects of temperature and pressure variations in the material, since the divided propagating waves will be each identically affected. Moreover, the device as described herein is substantially insensitive to variations in signal power or frequency from the oscillator 10, and thus requires no external tuning.

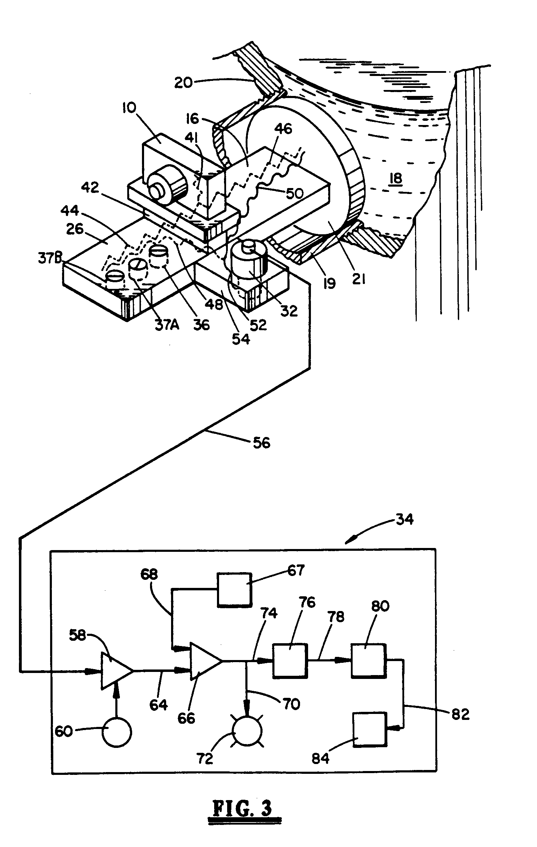

Figure 3 depicts an alternate embodiment of the present invention, wherein the microwave oscillator 10 is a Model GOS 2570 Gunn diode cavity-type oscillator, commercially sold by Alpha Industries. This oscillator generates a microwave having a constant frequency of approximately 10.5 gigahertz. The frequency of the oscillating microwave according to the present invention is in the range of from 1 to 20 gigahertz, and preferably from 3 to 15 gigahertz, in order to maximize the clarity of the reflected measurement arm signal yet minimize the likelihood that a thin film or powder layer seen by the measurement arm wave will be improperly interpreted as a material level higher than the measurement arm.

The propagated microwave 41 from the oscillator 10 is injected by a waveguide 42 to the bridge circuit. Each of the waveguides 42, 16, 26 and 54 are rectangular in cross-sectional configuration, e.g., 0.4 inches by 0.9 inches. For the embodiment shown in Figures 1 and 2, the measurement arm 16 and the reference arm 26 preferably are the same length. These wave-guides may be fabricated from WR 90 bronze waveguide commercially available from A. T. Wall.

The microwave 41 is equally divided by a conventional hybrid or magic Tee within the bridge circuit, which causes propagated waves to travel horizontally down arms 16 and 26. The waveguides 16 and 26 are axially aligned, while the axis of waveguides 42 and 54 are perpendicular thereto. At the end of the measurement arm 16 is a dielectric window 21, which may be fabricated from various plastics or glass materials, such a Ryton®, and is transparent to microwaves at the frequency level described above. The window 21 is sealingly positioned within nipple 19, which in turn is affixed to the tank wall 20 caontaining fluid or solid material 18. Thus, a maximum of one window in a vessel will be necessary according to the present invention. Moreover, if the tank material itself is substantially transparent to microwaves, e.g. fiberglass, the end of the waveguide 16 may be positioned against the exterior of the tank wall, and no special window is necessary in the tank wall.

As previously described, a portion of the propagating wave 46 will be reflected by the boundary layer at the interior surface of the window 21. The amplitude and frequency of the reflected wave will be significantly altered, however, by the impedance of that material on the microwave. Since air (or vapor, dust or foam) represent a significantly different impedance value to a microwave than does a liquid or solid material, the reflected measurement arm signal 50 will be significantly altered by the presence or absence of material 18 at the level of the measurement arm.

In the embodiment shown in Figure 3, the divided microwave 44 travels down reference arm 26, and is altered by tuning elements 37B, 37A and 36. These tuning elements may be adjusted so that the reflected reference arm wave 48 corresponds in amplitude and phase to the reflected measurement arm wave 50, so that the bridge circuit 12 is balanced and the reflected difference signal 52 is nil or zero. Once the bridge circuit is balanced, the differential signal 52 will remain near zero even if the frequency of the propagating wave from oscillator 10 drifts slightly in response to uncontrolled stimuli.

Preferably both resistive and capacitive tuning elements are provided for altering the reflected signal 48 from the reference arm to correspond to the reflected signal 50 from the mearurement arm. Resistant tuning element 36 functions to absorb a regulatable quantity of microwave energy by adjusting its depth with respect to reference arm 26, and thereby primarily controls the amplitude of the reflected reference arm signal 48 to correspond to the amplitude of the reflected measurement arm signal 50. Two capacitive tuning elements 37A and 37B may also be regulated to primarily control the phase of the reflected reference arm signal 48. Each of the tuning elements are provided a fixed distance, e.g., 1/4 wavelength apart, for maximizing their overall control capability. In the embodiment shown in Figure 3, the elements 37A, 37B and 36 are placed 1/4 wavelength, 1/2 wavelength, and 3/4 wavelength from the end of the waveguide 26. Each of these tuning elements is commercially available from Johanson Manufacturing Corp. under Part Nos. 6927-0 and 6952-0, respectively.

The reflected difference signal 52 travels down waveguide 54 and is detected by microwave detector 32. A suitable detector 32 is available from Microwave Associates under Model MA40042. The direct current output from detector 32 is thus proportional to the magnitude of the amplitude and phase of the reflected difference signal, and this output is connected via 56 to the decision electronics 34.

The decision electronics 34 can be adjusted to establish a detector output threshold for switching action to controlled apparatus, such as alarm 35. The signal from the detector 32 is fed to the amplifier 58, which may be adjusted by an external selectivity adjustment 60 to alter the multiple constant K. The amplified ouptut 64 is thus input to comparator 66, and is compared to a switching threshold value which may either be input manually or fed by the computer 67 to the comparator 66 via line 68. The output from the computer 67 thus presents an adjustable threshold which permits control of the degree of mismatch that must be observed before a switching action is achieved. If the desired mismatch value is exceeded, light 72 may be actuated via line 70.

The output from comparator 66 is preferably connected via 74 to time delay 76, which enables adjustment of the time period necessary for the necessary mismatch from comparator 66 to be present before a switching action is obtained. Thus, the output 78 from the time delay 76 presents a switching action signal only if the desired threshold magnitude if observed for a selected period of time. This time adjustment feature is particularly useful for eliminating false switching actions that could otherwise be generated by the sloshing of agitated liquids within the tank 20. Finally , conventional failsafe electronic circuit 80 may be provided so that the relay 84 is responsive not only to the output from the comparator 80, but also the presence or absence of power to the circuitry. As previously indicated, the relay 84 may be used to control various equipment, such as lights, alarms, pumps, indicators, or other control devices.

It should be understood that the sensitivity of the present invention is substantially increased by providing a microwave bridge circuit which produces an output directly indicative of the difference, in either amplitude or phase, or both, between the reflected reference arm signal and the reflected measurement arm signal. Under either of the embodiments described herein, the reflected reference arm signal may be tuned so as to present an impedance equal to the impedance normally seen in the reflected measurement arm signal. While the microwave detector 32 particularly depicted herein has been primarily described as providing a D.C. output whose amplitude is indicative of both an amplitude or phase difference in the two reflected signals, it should be understood that detector circuits are available which sense only an amplitude imbalance or a phase imbalance in the microwave bridge signals. Thus, it is within the scope of the present invention to provide a microwave detector circuit which can distinguish between an amplitude and a phase differential signal, and appropriate modifications would be made to the decisions electronics described herein, as those skilled in the art readily appreciate.

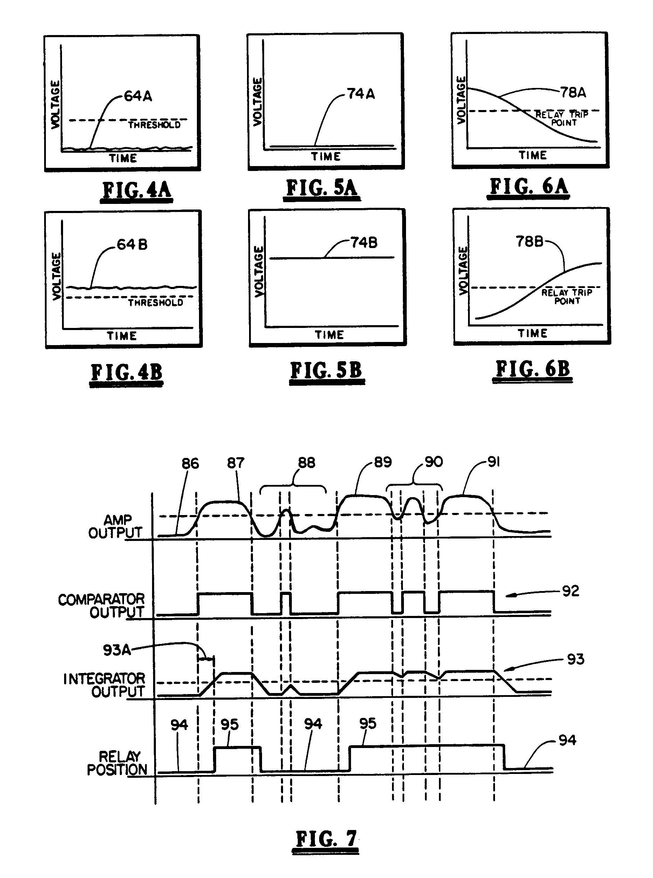

Figures 4A and 4B illustrate typical signals 64A and 64B from the amplifier 58. Specifically, the signal 64A illustrates the differential signal 52 when the detector is near null. Conversely, signal 64B illustrates the signal from the amplifier 58 when the detector is away from null and constructive interference is experienced by the differential signal 52. Figures 5A and 5B illustrate the resultant signal after modification of the signals illustrated in Figures 4A and 4B. Signal 74A corresponds to signal 64A after passing through the comparator 66. Similarly, signal 74B corresponds to signal 64B after passing through the comparator 66.

Figures 6A and 6B illustrate the effect of integration on the comparator output signal as illustrated in Figures 5A and 5B. Figure 6A illustrates the output from the time delay 76 when the comparator output is low, e.g., signal 74A. Similarly, figure 6B illustrates the effect on signal 78B when the comparator output is high. Figures 6A and 6B illustrate that a relay trip point can be adjusted at a specific voltage. When the signals 78A and 78B pass above or below the specified relay trip voltage, the relay is activated or deactivated.

Figure 7 is a multisequence illustration of the signals generated by the present invention when used for ullage measurement. The amplifier output 64 is illustrated at the top of Figure 7. The amplifier output 64 passes through a sequence of changes as follows: a null signal 86, a non-null signal 87, a null signal with a splash 88, a non-null signal 89, a splash signal 90, and a non-null signal 91. The corresponding output from the comparator is illustrated in Figure 7 as signal 92. When the signal from the time delay 76 is applied to the signal 92, the resultant integrator output signal 93 is created. The time delay between recognition and relay tripping is adjustable as illustrated by the spacing 93A. The activation or deactivation of the relay is illustrated in the bottom portion of Figure 7. An open relay is represented by numeral 94 and a closed relay is represented by numeral 95.

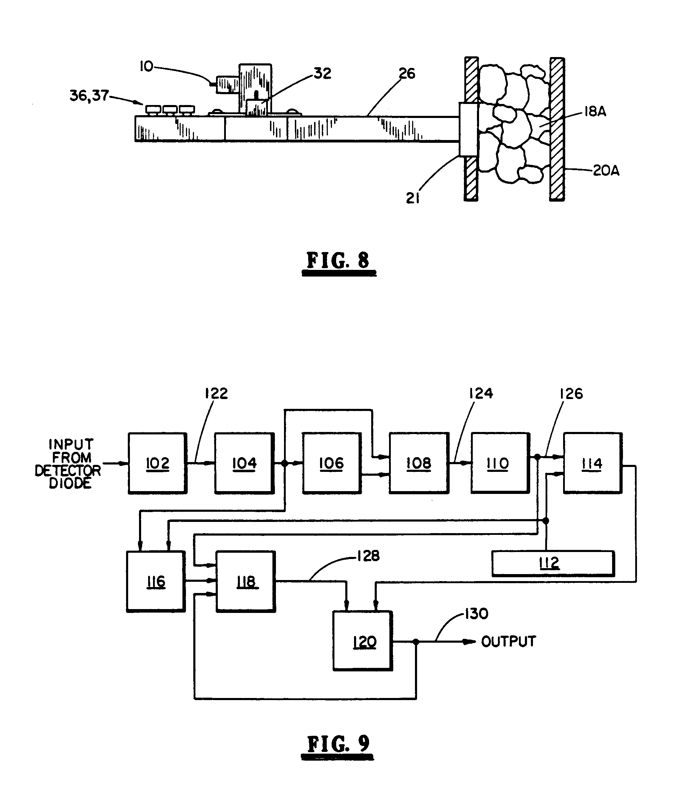

Figure 8 illustrates another embodiment of the present invention utilized to measure the flow/no-flow characteristics of material in a conduit. Figure 8 illustrates granular material 18A passing through conduit 20A. The oscillator 10 is associated with the conduit 20A by the window 21. The detector 32 is illustrated associated with the waveguide 26 and tuning elements 36 and 37. Figure 8 is similar to the embodiment illustrated in Figure 3 for measuring ullage.

Figure 9 illustrates a block diagram of a preferred form of the decision electronics as used in conjunction with the apparatus of the present invention illustrated in Figure 8. Figure 9 includes the input amp 102, the sample/hold circuit 104, the low pass filter 106, the differential amplifier 108, the full wave rectifier 110, the voltage reference 112, the voltage comparator 114, the sum/invert circuit 116, the sum/integrate circuit 118 and the output control/time 120. The operation of the flow/no-flow detector of the present invention depends upon observing the changes in the output signal of the microwave bridge circuit that are induced by very slight changes in the reflection coefficient associated with the interface of the material. The signal from the detector 32 is input to the amplifier 102. The signal 122 passes from the amplifier 102 into the sample/hold circuit 104. The sample/hold circuit 104 is used to sample the output pulse and to hold this voltage constant until the next pulse is observed. If there are no changes in the pulse-to-pulse signal level, the output of the sample/hold circuit 104 will not vary.

After the sample/hold circuit 104, it is the objective of the present invention to detect very slight changes in signal amplitude. Although there are many circuits available for detecting a change in the amplitude of a signal, the presently preferred circuit utilizes the low pass filter 106, and the differential amplifier 108. The signal received from the sample/hold circuit 104 is divided into two channels, one of which is filtered or equivalently delayed by the low pass filter 106 and a second channel which is unfiltered. A differential amplifier 108 operates on the filtered and unfiltered signals to produce a bipolar output that represents the difference between an instantaneous value of the output signal and its near term smoothed or delayed value. The resultant bipolar signal is rectified by the full wave rectifier 110. The output of the full wave rectifier 110 is input into the voltage comparator 114 in conjunction with the voltage reference 112. A primary control signal is output from the voltage comparator 114 and is utilized in conjunction with the sum/invert circuit 116 and the sum/integrate circuit 118 which acts generally as an analog threshold computer. The output control/timer 120 provides the output to drive a relay or the like.

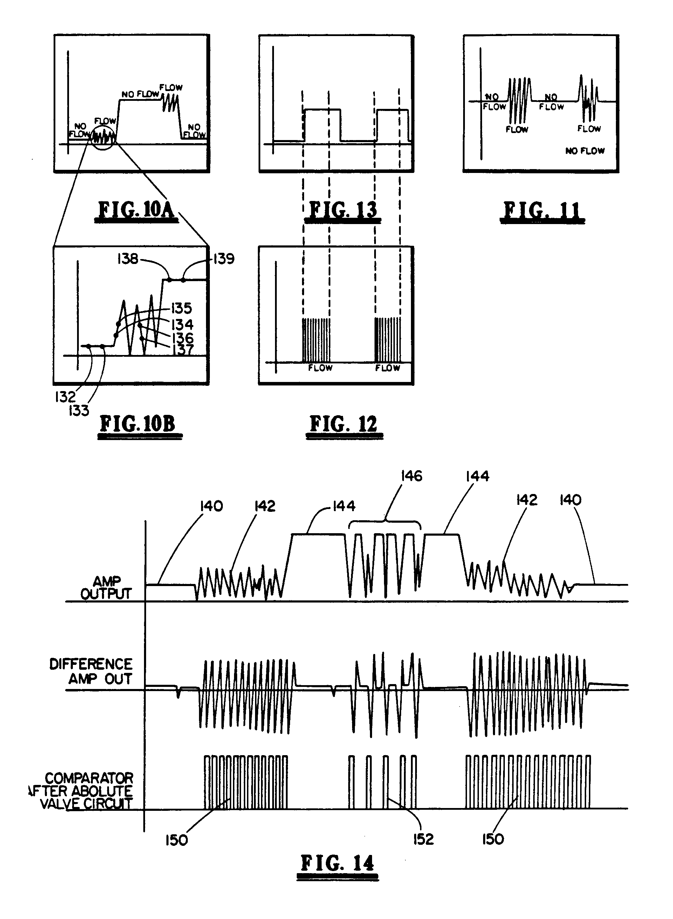

Figures 10A and 10B illustrate a typical signal from the input amplifier 102 for better describing one aspect of the present invention. Figure 10A illustrates the general signal 122 output from the amplifier 102. As readily indicated on Figure 10A, the flow of material is represented by fluctuations in the signal 122. When no material is flowing, the signal 122 is quiet. Figure 10B is an exploded view of a portion of Figure 10A. As noted on Figure 10B, there are instantaneous points 132 through 139. The circuit takes a difference between the present output of the amplifier 102 and subtracts it from a delayed or filtered version of the output of the amplifier 102. Thus, the circuit subtracts a delayed version of the signal from itself, e.g., in Figure 10B, point 132 is subtracted from point 133, point 134 is subtracted from point 135, point 136 is subtracted from point 137, and point 138 is subtracted from point 139. It should be noted that it is not the signal level that is important but rather whether or not the signal changes in amplitude with respect to time. Thus, any signal that is constant with respect to time, i.e., flat, will give a zero output regardless of its magnitude. Any signal 122 that is changing with respect to time will give a positive or a negative signal depending on whether the input is going up or down.

Figure 11 illustrates a typical bipolar signal from the differential amplifier 108 associated with the present invention. Specifically, Figure 11 illustrates the differences as referred to in Figure 10B. The flow characteristics associated with the signal are noted on Figure 11. When the flow of material is present in the conduit 20A, the signal fluctuates. When there is no flow in the conduit 20A, the signal is steady.

Figure 12 illustrates a typical unipolar signal associated with the present invention. The bipolar signals associated with Figure 11 are passed through a full wave rectifier 110 so that the resultant signal is the absolute value of the signals illustrated in Figure 11. Figure 13 illustrates a typical relay drive output signal which is illustrated in conjunction with the unipolar signals of Figure 12.

Figure 14 illustrates a multisequence illustration of the signals generated by the present invention when used for flow/no-flow detection within a conduit. The uppermost portion of Figure 14 illustrates the output from the amplifier 102. Specifically, numeral 140 illustrates a no-flow/null material state. The numeral 142 illustrates a flow/null material state. The numeral 144 illustrates a no-flow/non-null material state. The numeral 146 represents a state where random pellets are dropping past the window 121. The amplifier signals 122 are converted by the differential amplifier 108 to yield the output illustrated in the middle of Figure 14. It should be noted that the middle ouptut is the same output as illustrated thereabove but in a bipolar signal 124. The lowermost portion of Figure 14 illustrates the unipolar signal 126 as generated after the null wave rectifier 110 and operated on by the sum/invert circuit 116 and sum/integrate circuit 118. The sequence of pulses represented by numeral 150 illustrate pulses which cause the relay to trip. The sequence of pulses referenced by numeral 152 can be adjusted to be treated as a "flow condition" or a "no-flow condition" depending on the particular system being used.

Although the invention has been described in terms of the specified embodiments which are set forth in detail, it should be understood that this is by illustration only and that the invention is not necessary limited thereto, since alternative embodiments and operating techniques will become apparent to those skilled in the art in view of the disclosure.

**Claims**

1. A sensor apparatus arranged to detect the presence or absence or for detecting the movement of material (18) in a container (20) or conduit (20a), said apparatus comprising

   a microwave oscillator (10) arranged to generate a constant propagated microwave in a frequency range of 1 to 20 gigahertz;

   a container (20) or conduit (20a) adapted to hold therein quantities of material (18) or to guide a varying throughflow of material (18a), respectively, said container (20) or conduit (20a) having a measurement portion substantially transparent to the propagated microwave frequency;

a microwave bridge (12) having a first part thereof connected to said microwave oscillator (10) and arranged to divide the microwave into a measurement microwave and a reference microwave;

a first guide (16) attached to said measurement portion of said container (20) or conduit (20a), and arranged to guide the measurement microwave into the container (20) or conduit (20a) or through said measurement portion and to return to the microwave bridge (12), a reflected measurement microwave indicative of the reflection coefficient at the boundary layer of the measurement portion or where the microwave encounters the material (18, 18a), the coefficient being significantly altered by the presence, the absence or the movement of the material (18, 18a) at the level of the first guide means (16);

a second guide (26) arranged to transmit the reference wave from the microwave bridge (12) and to return a reflected reference wave to the microwave bridge (12);

the microwave bridge (12) being arranged to receive the reflected measurement and reference waves and to produce a difference wave corresponding to the difference in magnitude and phase between the reflected measurement and reference waves;

a detector (32) connected to said microwave bridge (12) and arranged to generate an output indicative of at least one of the magnitude and phase of the difference wave; and

a comparator (34) connected to said detector (32) and arranged to compare the magnitude of the detector output to a preselected signal magnitude and to provide an actuation signal indicative of the presence, absence or movement of the material (18, 18A) at the level of the first guide (16).

2. A sensor according to claim 1 wherein said second guide (26) includes reference wave altering means (36, 37A, 37B) arranged to alter the reflected reference wave to correspond to the reflected measurement microwave as altered by a selected one of the presence, absence or movement of the material (18) at the level of the first guide means (16).

3. A sensor according to claim 2, wherein the reference wave altering means (36, 37A, 37B) alters the amplitude and phase of the reflected reference microwave to correspond to the amplitude and phase of the reflected measurement microwave.

4. A sensor according to claim 2 or 3 wherein the reference wave altering means (36, 37A, 37B) comprises a sample chamber (30) containing a quantity of the material in the container (20) or conduit (20a) and positioned at an end of the second guide (26) opposite to said microwave bridge (12), the reflected reference microwave being indicative of the reflection coefficient at the boundary layer of the sample chamber (30).

5. A sensor according to claim 3 or 4 wherein the output of the detector means (32) is a DC signal whose magnitude is proportional to the magnitude of the difference in amplitude and phase between the reflected measurement and reference waves.

6. A sensor according to claim 2, 3, 4 or 5 wherein the reference wave altering means comprises:

a resistive tuning means (36) adjustably positionable with respect to the second guide (26) for selectively altering the magnitude of the reflected reference wave to equal the magnitude of the reflected measurement wave; and

two or more reactive tuning (37A,37B) elements adjustably positionable with respect to the second guide (26) for selectively altering the phase of the reflected reference wave to equal the phase of the reflected measurement wave.

7. A sensor according to any preceding claim further comprising amplifying means (58) for increasing the magnitude of the output from the detector means (32); and amplifying adjustment means (60) for selectively adjusting the gain of the amplifying means.

8. A sensor according to any preceding claim including time delay means (76) for receiving the actuation signal and outputting a control signal when the actuation signal is maintained for at least a selected time period.

9. A sensor according to any preceding claim wherein the measurement portion of the container (20) or conduit (20a) is a dielectric tank wall.

10. A sensor according to any preceding claim wherein the axes of the first (16) and second guide (26) are aligned, and the second guide (26) transmits the reference wave in a direction opposite the measurement portion of the container (20) or conduit (20a), the interior cross-section of the first guide (16) is substantially identical to the interior cross-section of the second guide (26) and the microwave bridge circuit (12) outputs the difference signal in a direction substantially normal to the axis of the first guide (16).

11. A method for detecting the presence or absence or for detecting the movement of material (18) in a conduit or container (20), including

generating (10) a constant propagated microwave in a frequency range of from 1 to 20 gigahertz;

separating (12) the propagating microwave into a measurement microwave and a reference microwave;

guiding the measurement microwave (16) into the container (20) or conduit (20a) or through a measurement portion of the container (20) or conduit (20a) substantially transparent to the propagated microwave frequency and returning a reflected measurement microwave indicative of the reflection coefficient at the boundary layer of the measurement portion, or where the microwave encounters the material (18), the coefficient being significantly altered by the presence, the absence or the movement of the material (18) at the boundary layer;

transmitting (26) the reference wave and returning a reflected reference wave;

receiving (12) the reflected measurement and reference waves and outputting a difference wave corresponding to the difference in magnitude and phase between the reflected measurement and reference waves;

generating (32) an output indicative of at least one of the magnitude and phase of the difference wave; and

comparing (34) the magnitude of the output to a preselected magnitude and providing an actuation signal indicative of the presence, absence or movement of the material at the boundary layer.

12. A method according to claim 11 including selectively altering (36, 37A, 37B) the reflected reference wave to correspond to the reflected measurement microwave as altered by a selected one of the presence, absence or movement of the material (18) at the boundary layer.

13. A method according to claim 12, wherein the amplitude and phase of the reflected reference microwave is selectively tuned to the amplitude and phase of the reflected measurement microwave (36, 37A, 37B).

14. A method according to claim 12 or 13 wherein the step of selectively altering the reflected reference wave includes subjecting the reference wave to the same material (28) as the material (18) in the container (20) or conduit (20a).

15. A method according to claim 12, 13 or 14 wherein the step of selectively altering the reflected reference wave includes

adjustably positioning a tuning element (36) to selectively alter the magnitude of the reflected reference wave to equal the magnitude of the reflected measurement wave; and

adjustably positioning another tuning element (37A, 37B) to selectively alter the phase of the reflected reference wave to equal the phase of the reflected measurement wave.

16. A method according to any one of claims 11 to 15 wherein the output indicative of the magnitude of the difference signal is a DC output proportional to the difference in amplitude and phase between the reflected measurement and reference waves.

17. The method as defined in any one of claims 11 to 16 wherein, for determining the presence of or the absence of material (18), the step of comparing the magnitude of the output comprises:

a) generating a comparator output by differentiating between the magnitude of the difference signal and a comparator threshold such that the comparator output is either low or high indicating the magnitude of the difference signal is either below or above the comparator threshold, respectively, and

b) generating an integrator output from the comparator output for activating a relay which drives lights, alarms, pumps and the like by damping down a low comparator output and by damping up a high comparator output whereby extraneous portions of the comparator output caused by splashing sloshing and the like are selectively purged from the resultant integrator output.

18. A method according to any one of claims 11 to 17 wherein, for determining the movement or no movement of material and particularly solid granular materials, the step of analyzing the difference signal comprises:

a) generating a bipolar signal, from the difference signal by taking the difference between a present instantaneous sample of the difference signal and a delayed instantaneous sample of the difference signal whereby no change in the amplitude of the instantaneous samples creates a zero bipolar signal, an increase in the delayed instantaneous sample creates a positive bipolar signal, and a decrease in the delayed instantaneous sample creates a negative bipolar signal;

b) generating a unipolar signal from the bipolar signal whereby the magnitude of the unipolar signal is equal to the absolute value of the bipolar signal; and

c) generating a drive signal based upon the frequency of the unipolar signal for discriminating between conditions of movement and no movement of the material being evaluated.

**Patentansprüche**

1. Sensorvorrichtung, die zur Erfassung des Vorhandenseins bzw. des Nichtvorhandenseins oder zur Erfassung der Bewegung eines Materials (18) in einem Behälter (20) oder einer Leitung (20a) angeordnet ist, wobei die Vorrichtung folgendes umfaßt:

einen Mikrowellenoszillator (10), der zur Erzeugung einer konstanten, sich ausbreitenden Mikrowelle in einem Frequenzbereich von 1 bis 20 Gigahertz angeordnet ist,

einen Behälter (20) oder eine Leitung (20a), die so ausgelegt sind, daß sie in sich jeweils Mengen von Material (18) fassen oder einen wechselnden Durchfluß an Material (18a) leiten können, wobei der Behälter (20) oder die Leitung (20a) einen Meßabschnitt aufweisen, der gegenüber der Frequenz der sich ausbreitenden Mikrowelle im wesentlichen durchlässig ist,

eine Mikrowellenbrücke (12), wobei ein erster Teil davon mit dem Mikrowellenoszillator (10) verbunden ist und die zum Trennen der Mikrowelle in eine Meßmikrowelle und in eine Bezugsmikrowelle angeordnet ist,

einen ersten Leiter (16), der an dem Meßabschnitt des Behälters (20) oder der Leitung (20a) angebracht ist und angeordnet ist, um die Meßmikrowelle in den Behälter (20) oder die Leitung (20a) oder durch den Meßabschnitt und zurück zu der Mikrowellenbrücke (12) zu leiten, wobei eine reflektierte Meßmikrowelle den Reflexionskoeffizienten an der Grenzfläche des Meßabschnitts oder an dem Punkt anzeigt, an dem die Mikrowelle auf das Material (18, 18a) trifft, wobei der Koeffizient durch das Vorhandensein, das Nichtvorhandensein oder die Bewegung des Materials (18, 18a) auf der Höhe des ersten Leiters (16) in einem beträchtlichen Maße verändert wird,

einen zweiten Leiter, der zur Übertragung der Bezugswelle von der Mikrowellenbrücke (12) und zum Zurückleiten einer reflektierten Bezugswelle zu der Mikrowellenbrücke (12) angeordnet ist,

wobei die Mikrowellenbrücke (12) angeordnet ist, um die reflektierten Meß- und Bezugswellen zu empfangen, und um eine Differenzwelle zu erzeugen, die dem Größen- und Phasenunterschied zwischen den reflektierten Meß- und Bezugswellen entspricht,

einen Detektor (32), der mit der Mikrowellenbrücke (12) verbunden ist und zur Erzeugung einer Ausgangsleistung angeordnet ist, die zumindest eine der Größen und Phasen der Differenzwelle anzeigt, und

einen Vergleicher (34), der mit dem Detektor (32) verbunden ist und zum Vergleichen der Größe der Detektorausgangsleistung mit einer vorher ausgewählten Signalgröße und zum Liefern eines Stellsignals vorgesehen ist, das das Vorhandensein, das Nichtvorhandensein oder eine Bewegung des Materials (18, 18a) auf der Höhe des ersten Leiters (16) anzeigt.

2. Sensor nach Anspruch 1, wobei der zweite Leiter (26) Bezugswellenänderungsmittel (36, 37A, 37B) umfaßt, die vorgesehen sind, damit sie die reflektierende Bezugswelle so verändern, daß diese der reflektierten Meßmikrowelle entspricht, so wie diese durch eine ausgewählte Bedingung des Vorhandenseins, des Nichtvorhandenseins oder der Bewegung des Materials (18) auf der Ebene des ersten Leiters (16) geändert worden ist.

3. Sensor nach Anspruch 2, bei dem das Bezugswellenänderungsmittel (36, 37A, 37B) die Amplitude und die Phase der reflektierten Bezugsmikrowelle so ändert, daß diese der Amplitude und der Phase der reflektierten Meßmikrowelle entspricht.

4. Sensor nach Anspruch 2, oder 3, bei dem das Bezugswellenänderungsmittel (36, 37A, 37B) eine Probenkammer (30) umfaßt, die eine Menge des Materials in dem Behälter (20) oder der Leitung (20a) beinhaltet und an einem Ende des zweiten Leiters (26) gegenüber der Mikrowellenbrücke (12) angeordnet ist, wobei die reflektierte Bezugsmikrowelle den Reflexionskoeffizienten an der Grenzschicht der Probenkammer (30) anzeigt.

5. Sensor nach Anspruch 3 oder 4, bei dem die Ausgangsleistung des Detektormittels (32) ein Gleichstromsignal ist, dessen Größe proportional zu der Größe des Amplituden- und Phasenunterschieds zwischen den reflektierten Meß- und Bezugswellen ist.

6. Sensor nach Anspruch 2, 3, 4 oder 5, bei dem das Bezugswellenänderungsmittel folgendes umfaßt:
ein Widerstandseinstellmittel (36), das hinsichtlich des zweiten Leiters (26) verstellbar positioniert werden kann, um selektiv die Größe der reflektierten Bezugswelle zu ändern, damit diese gleich der Größe der reflektierten Meßwelle wird, und
zwei oder mehrere reaktive Einstellelemente (37A, 37B), die hinsichtlich des zweiten Leiters (26) verstellbar positioniert werden können, um die Phase der reflektierten Bezugswelle selektiv so zu ändern, daß sie gleich groß wie die Phase der reflektierten Meßwelle wird.

7. Sensor nach einem der vorhergehenden Ansprüche, desweiteren mit Verstärkungsmitteln (58) zum Steigern der Größe der Ausgangsleistung der Detektormittel (32), und Verstärkungseinstellmittel (60) zum selektiven Einstellen des Verstärkungsfaktors der Verstärkungsmittel.

8. Sensor nach einem der vorhergehenden Ansprüche, mit Verzögerungsmitteln (76) zum Empfangen des Stellsignals und zur Ausgabe eines Steuersignals, wenn das Stellsignal zumindest über einen ausgewählten Zeitraum hin aufrechterhalten wird.

9. Sensor nach einem der vorhergehenden Ansprüche, bei dem der Meßabschnitt des Behälters (20) oder der Leitung (20a) eine dielektrische Behälterwand ist.

10. Sensor nach einem der vorhergehenden Ansprüche, bei dem die Achsen der ersten (16) und zweiten Leiter (26) ausgerichtet sind, und der zweite Leiter (26) die Bezugswelle in einer Richtung überträgt, die dem Meßabschnitt des Behälters (20) oder der Leitung (20a) gegenüberliegt, der innere Querschnitt des ersten Leiters (16) im wesentlichen identisch zu dem inneren Querschnitt des zweiten Leiters (26) ist, und die Mikrowellenbrückenschaltung (12) das Differenzsignal in einer Richtung ausgibt, die im wesentlichen senkrecht zu der Achse des ersten Leiters (16) ist.

11. Verfahren zum Erfassen des Vorhandenseins bzw. des Nichtvorhandenseins oder zum Erfassen der Bewegung eines Materials (18) in einer Leitung oder einem Behälter (20), das folgendes umfaßt:
Erzeugen (10) einer konstanten, sich ausbreitenden Mikrowelle in einem Frequenzbereich von 1 bis 20 Gigaherzt,
Trennen (12) der sich ausbreitenden Mikrowelle in eine Meßmikrowelle und eine Bezugsmikrowelle,
Leiten der Meßmikrowelle (16) in dem Behälter (20) oder der Leitung (20a) bzw. durch einen Meßabschnitt des Behälters (20) oder der Leitung (20a), der für die Frequenz der sich ausbreitenden Mikrowelle im wesentlichen durchlässig ist, und Zurückleiten einer reflektierten Meßmikrowelle, die den Reflexionskoeffizienten an der Grenzschicht des Meßabschnitts oder an der Stelle anzeigt, an dem die Mikrowelle auf das Material (18) trifft, wobei der Koeffizient durch das Vorhandensein, das Nichtvorhandensein oder die Bewegung des Materials (18) an der Grenzschicht erheblich verändert wird,
Weiterleiten (26) der Bezugswelle und Zurückleiten einer reflektierten Bezugswelle,
Empfangen (12) der reflektierten Meß- und Bezugswellen und Ausgeben einer Differenzwelle, die dem Größen- und Phasenunterschied zwischen den reflektierten Meß- und Bezugswellen entspricht,
Erzeugen (32) einer Ausgangsleistung, die zumindest eine der Größen und Phasen der Differenzwelle anzeigt, und
Vergleichen (34) der Größe der Ausgangsleistung mit einer vorher ausgewählten Größe, und Liefern eines Stellsignals, das das Vorhandensein, das Nichtvorhandensein oder die Bewegung des Materials an der Grenzschicht anzeigt.

12. Verfahren nach Anspruch 11, bei dem die reflektierte Bezugswelle selektiv so geändert (36, 37A, 37B) wird, daß diese der reflektierten Meßmikrowelle entspricht, so wie diese durch eine ausgewählte Bedingung des Vorhandenseins, Nichtvorhandenseins oder der Bewegung des Materials (18) an der Grenzschicht geändert worden ist.

13. Verfahren nach Anspruch 12, bei dem die Amplitude und die Phase der reflektierten Bezugsmikrowelle selektiv auf die Amplitude und die Phase der reflektierten Meßmikrowelle (36, 37A, 37B) eingestellt wird.

14. Verfahren nach Anspruch 12 oder 13, bei dem der Schritt des selektiven Änderns der reflektierten Bezugswelle auch beinhaltet, daß man die Bezugswelle dem gleichen Material (28) wie dem Material (18) in dem Behälter (20) oder in der Leitung (20a) aussetzt.

15. Verfahren nach Anspruch 12, 13 oder 14, bei dem der Schritt des selektiven Änderns der reflektierten Bezugswelle folgendes umfaßt: verstellbares Positionieren eines Einstellelements (36), um die Größe der reflektierten Bezugswelle selektiv zu verändern, damit sie gleich der Größe der reflektierten Meßwelle ist, und verstellbares Positionieren eines weiteren Einstellelements (37A, 37B), um die Phase der reflektierten Bezugswelle selektiv zu verändern, damit sie gleich groß wie die Phase der reflektierten Meßwelle ist.

16. Verfahren nach einem der Ansprüche 11 bis 15, bei dem die die Größe des Differenzsignals angebende Ausgangsleistung eine Gleichstromausgangsleistung ist, die dem Amplituden- und Phasenunterschied zwischen den reflektierten Meß- und Bezugswellen proportional ist.

17. Verfahren nach einem der Ansprüche 11 bis 16, bei dem der Schritt des Vergleichens der Größe der Ausgangsleistung zur Bestimmung des Vorhandenseins oder des Nichtvorhandenseins von Material (18) folgendes umfaßt:
a) Erzeugen einer Vergleicherausgangsleistung durch Differenzieren zwischen der Größe des Differenzsignals und einem Vergleicherschwellwert derart, daß die Vergleicherausgangsleistung entweder niedrig oder hoch ist, was die Größe des Differenzsignals anzeigt, und somit jeweils unterhalb oder über dem Vergleicherschwellwert liegt, und
b) Erzeugen einer Integratorausgangsleistung ausgehend von der Vergleicherausgangsleistung zum Aktivieren eines Relais, das Lampen, Alarmvorrichtungen, Pumpen und dergleichen durch Dämpfen einer niedrigen Ausgangsleistung und durch Verstärken einer hohen Vergleicherausgangsleistung antreibt, wodurch die durch Spritzen, Schwappen und dergleichen verursachten Fremdabschnitte der Vergleicherausgangsleistung selektiv von der resultierenden Integratorausgangsleistung geklärt werden.

18. Verfahren nach einem der Ansprüche 11 bis 17, bei dem zum Feststellen, ob sich das Material, und vor allem festes, körniges Material, bewegt oder nicht, der Schritt des Analysierens des Differenzsignals folgendes umfaßt:
a) Erzeugen eines bipolaren Signals aus dem Differenzsignal, indem man die Differenz zwischen einem vorhandenen Momentanwert des Differenzsignals und einem verzögerten Momentanwert des Differenzsignals nimmt, wobei ein bipolares Nullsignal erzeugt wird, wenn keine Änderung in der Amplitude des Momentanwerts vorliegt, ein Anstieg in dem verzögerten Momentanwert ein positives bipolares Signal erzeugt und eine Verringerung des verzögerten Momentanwerts ein negatives bipolares Signal erzeugt,
b) Erzeugen eines unipolaren Signals aus dem bipolaren Signal, wodurch die Größe des unipolaren Signals gleich dem absoluten Wert des bipolaren Signals wird, und
c) Erzeugen eines Antriebssignals auf der Grundlage der Frequenz des unipolaren Signals zur Unterscheidung zwischen den Bedingungen, bei denen eine Bewegung des Materials vorliegt, und solchen, bei denen keine Bewegung des Materials vorliegt die ausgewertet werden.

## Revendications

1. Un dispositif capteur permettant de détecter la présence ou l'absence, ou bien le déplacement d'un matériau (18) dans un réservoir (20) ou un conduit (20a), ledit dispositif comprenant
un oscillateur a micro-onde (10) prévu pour produire une micro-onde a propagation constante, dans une plage de fréquence de 1 à 20 Gigahertz,
un réservoir (20) ou conduit (20a) adapté, respectivement, pour contenir à l'intérieur une quantité de matériau (18) ou pour guider un débit variable de matériau (18a), ledit réservoir (20) ou conduit (20a) ayant une portion prévue pour la mesure qui est essentiellement transparente à la fréquence de la micro-onde propagée,
un pont à micro-onde (12) dont une première partie est reliée audit oscillateur à micro-onde (10), et prévu pour diviser la micro-onde en une micro-onde de mesure et une micro-onde de référence,
un premier guide (16) relié à ladite portion de mesure dudit réservoir (20) ou conduit (20a), et prévu pour guider la micro-onde de mesure à l'intérieur du réservoir (20) ou conduit (20a), ou à travers ladite portion de mesure, et pour renvoyer au pont à micro-onde (12), une micro-onde de mesure réfléchie représentative de l'indice de réflexion à la surface du dioptre formé par la portion de mesure, ou bien la où la micro-onde rencontre le matériau (18, 18a), cet indice étant sensiblement modifié par la présence, l'absence ou le déplacement du matériau (18, 18a), au niveau du premier moyen de guidage (16),

un second guide (26) prévu pour transmettre l'onde de référence du pont à micro-onde (12) et pour renvoyer une onde de référence réfléchie au pont à micro-onde (12),

le pont à micro-onde (12) étant prévu pour recevoir les ondes de mesure et de référence réfléchies et pour produire une onde différentielle correspondant a l'écart d'amplitude et de phase entre les ondes de mesure et de référence réfléchies,

un détecteur (32) relié audit pont à micro-onde (12) et prévu pour produire une sortie représentative de l'une au moins des valeurs d'amplitude et de phase de l'onde différentielle, et

un comparateur (34) relié audit détecteur (32) et prévu pour comparer l'amplitude de la sortie du détecteur à une amplitude de signal prédéfinie et pour fournir un signal de commande représentatif de la présence, de l'absence ou du déplacement du matériau (18, 18a) au niveau du premier guide (16).

2. Un capteur selon la revendication 1, dans lequel ledit second guide (26) comporte un moyen de modification de l'onde de référence (36, 37A, 37B) prévu pour modifier l'onde de référence réfléchie afin qu'elle corresponde a la micro-onde de mesure réfléchie telle que modifiée, selon le cas, par la présence, l'absence ou le déplacement du matériau (18) au niveau du premier guide (16).

3. Un capteur selon la revendication 2, dans lequel le moyen de modification de l'onde de référence (36, 37A, 37B) modifie l'amplitude et la phase de la micro-onde de référence réfléchie pour correspondre à l'amplitude et à la phase de la micro-onde de mesure réfléchie.

4. Un capteur selon les revendications 2 ou 3, dans lequel le moyen de modification de l'onde de référence (36, 37A, 37B) comporte une chambre d'échantillonnage (30) contenant une quantité du matériau du réservoir (20) ou conduit (20a) et positionnée à l'extrémité du second guide (26), opposée audit pont à micro-onde (12), la micro-onde de référence réfléchie étant représentative de l'indice de réflexion à la surface du dioptre formé par la chambre d'échantillonnage (30).

5. Un capteur selon les revendications 3 ou 4, dans lequel la sortie du moyen de détection (32) est un signal CC dont l'amplitude est proportionnelle à la valeur de l'écart d'amplitude et de phase entre les ondes de mesure et de référence réfléchies.

6. Un capteur selon les revendications 2, 3, 4 ou 5, dans lequel le moyen de modification de l'onde de référence comprend :

un élément d'accord résistif (36) réglable en position par rapport au second guide (26) permettant de modifier d'une façon sélective l'amplitude de l'onde de référence réfléchie pour la rendre égale à l'amplitude de l'onde de mesure réfléchie, et

au moins deux éléments d'accord réactifs (37A, 37B) réglables en position par rapport au second guide (26), permettant de modifier d'une façon sélective la phase de l'onde de référence réfléchie pour la rendre égale à la phase de l'onde de mesure réfléchie.

7. Un capteur selon l'une quelconque des revendications précédentes, comprenant en plus un moyen d'amplification (58) permettant d'augmenter l'amplitude de la sortie du moyen de détection (32), et un moyen de réglage d'amplification (60) permettant de régler d'une façon sélective le gain du moyen d'amplification.

8. Un capteur selon l'une quelconque des revendications précédentes, comprenant un moyen de temporisation (76) prévu pour recevoir le signal de commande et pour émettre un signal de contrôle lorsque le signal de commande est présent pendant un temps minimum déterminé.

9. Un capteur selon l'une quelconque des revendications précédentes, dans lequel la portion de mesure du réservoir (20) ou conduit (20a) est une paroi de réservoir diélectrique.

10. Un capteur selon l'une quelconque des revendications précédentes, dans lequel les axes du premier guide (16) et du second guide (26) sont alignés, et le second guide (26) transmet l'onde de référence dans une direction opposée à la portion de mesure du réservoir (20) ou conduit (20a), la section transversale intérieure du premier guide (16) étant pratiquement identique à la section transversale intérieure du second guide (26) et le circuit du pont à micro-onde (12) émettant le signal différentiel dans une direction pratiquement perpendiculaire à l'axe du premier guide (16).

**11.** Une méthode de détection de la présence, de l'absence ou du déplacement d'un matériau (18) dans un réservoir (20) ou conduit (20a), comportant

la production (10) d'une micro-onde à propagation constante dans une plage de fréquence de 1 à 20 Gigahertz,

la séparation (12) de la micro-onde propagée en une micro-onde de mesure et une micro-onde de référence,

le guidage de la micro-onde de mesure (16) dans le réservoir (20) ou conduit (20a) ou bien à travers une portion de mesure du réservoir (20) ou conduit (20a) sensiblement transparente à la fréquence de la micro-onde propagée, et le renvoi d'une micro-onde de mesure réfléchie représentative de l'indice de réflexion à la surface du dioptre formé par la portion de mesure, ou bien là où la micro-onde rencontre le matériau (18), cet indice étant sensiblement modifié par la présence, l'absence ou le déplacement du matériau (18) au niveau de la surface du dioptre,

la transmission (26) de l'onde de référence et le renvoi d'une onde de référence réfléchie,

la réception (12) des ondes de mesure et de référence réfléchies, et l'émission d'une onde différentielle correspondant à la différence d'amplitude et de phase entre les ondes de mesure et de référence réfléchies,

l'émission (32) d'une sortie représentative d'au moins l'une des valeurs d'amplitude et de phase de l'onde différentielle, et

la comparaison (34) de l'amplitude de la sortie à une amplitude prédéfinie et l'émission d'un signal de commande représentatif de la présence, de l'absence ou du déplacement du matériau au niveau de la surface du dioptre.

**12.** Une méthode selon la revendication 11 comportant la modification sélective (36, 37A, 37B) de l'onde de référence réfléchie pour correspondre à l'onde de mesure réfléchie modifiée par la présence, l'absence ou le déplacement du matériau (18) au niveau de la surface du dioptre.

**13.** Une méthode selon la revendication 12, dans laquelle l'amplitude et la phase de la micro-onde de référence réfléchie sont accordées d'une façon sélective à l'amplitude et à la phase de la micro-onde de mesure réfléchie (36, 37A, 37B).

**14.** Une méthode selon les revendications 12 ou 13, dans laquelle l'étape de modification sélective de l'onde de référence réfléchie comporte l'application de l'onde de référence au même matériau (28) que le matériau (18) du réservoir (20) ou conduit (20a).

**15.** Une méthode selon les revendications 12, 13 ou 14, dans laquelle l'étape de modification sélective de l'onde de référence réfléchie comporte

un élément d'accord réglable en position (36), permettant de modifier d'une façon sélective l'amplitude de l'onde de référence réfléchie pour la rendre égale à l'amplitude de l'onde de mesure réfléchie, et

un autre élément d'accord réglable en position (37A, 37B), permettant de modifier d'une façon sélective la phase de l'onde de référence réfléchie pour la rendre égale à la phase de l'onde de mesure réfléchie.

**16.** Une méthode selon l'une des revendications 11 à 15, dans laquelle la sortie représentative de l'amplitude du signal différentiel est une sortie CC proportionnelle à la différence d'amplitude et de phase entre l'onde de mesure et l'onde réfléchie.

**17.** La méthode définie dans l'une quelconque des revendications 11 à 16, dans laquelle, pour détecter la présence ou l'absence du matériau (18), l'étape de comparaison de l'amplitude de la sortie comprend :

a) la production d'une sortie comparateur par comparaison de l'amplitude du signal différentiel avec le seuil d'un comparateur, de telle sorte que la sortie du comparateur soit au niveau bas ou au niveau haut, selon que la valeur de l'amplitude du signal différentiel est, respectivement, supérieure ou inférieure au seuil du comparateur, et

b) la production d'une sortie d'intégration à partir de la sortie du comparateur, permettant d'activer un relais de commande de lampes, d'alarmes, de pompes ou autres, en amortissant la descente de la sortie basse du comparateur et en amortissant la montée de la sortie haute du comparateur, le bruit à la sortie du comparateur produit par les transitoires ou autres fluctuations étant supprimé d'une façon sélective à la sortie de l'intégrateur.

**18.** Une méthode selon l'une quelconque des revendications 11 à 17, dans laquelle, pour détecter le mouvement ou l'absence de mouvement du matériau, et en particulier des matériaux solides en grains, l'étape d'analyse du signal différentiel comprend :

a) la production d'un signal bipolaire, obtenu à partir du signal différentiel en prenant la différence entre un échantillon du signal différentiel présent à un instant donné et un échantillon du signal différentiel décalé dans le temps, de telle sorte que l'absence de variation de l'amplitude des échantillons crée un signal bipolaire nul, un accroissement de l'échantillon décalé dans le temps crée un signal bipolaire positif, et une diminution de l'échantillon décalé dans le temps crée un signal bipolaire négatif,

b) la production d'un signal unipolaire à partir du signal bipolaire, de telle sorte que l'amplitude du signal unipolaire soit égale à la valeur absolue du signal bipolaire, et

c) la production d'un signal de commande basé sur la fréquence du signal unipolaire et permettant la discrimination entre les conditions de mouvement et de non mouvement du matériau observé.

**FIG. 1**

**FIG. 2**

**FIG. 3**

FIG. 4A

FIG. 5A

FIG. 6A

FIG. 4B

FIG. 5B

FIG. 6B

FIG. 7

**FIG. 8**

**FIG. 9**

**FIG. 10A**

**FIG. 13**

**FIG. 11**

**FIG. 10B**

**FIG. 12**

**FIG. 14**

AMP OUTPUT

DIFFERENCE AMP OUT

COMPARATOR AFTER ABOLUTE VALVE CIRCUIT